# EUROPEAN PATENT APPLICATION

(11) **EP 1 530 342 A2**
(43) Date of publication of application: **11.05.2005**
(21) Application number: 04026462.4
(22) Date of filing: 08.11.2004
(51) Int. Cl.: H04L 29/06, H04Q 7/32, G06F 17/30

(54) **Mobile communication terminal, mobile communication system and content delivery method**

(30) Priority: 10.11.2003 JP 2003380349
(71) Applicant: NEC CORPORATION, Tokyo (JP)
(72) Inventor: Otsuka, Osamu, Tokyo (JP)
(74) Representative: VOSSIUS & PARTNER

(57) **Abstract**

A mobile communication terminal can transfer content received from a content server to another terminal only when a predetermined operating condition is satisfied. The content server transmits the operating condition together with the content. Alternatively, a data transmitting device transmits the operating condition, as unique data, to the mobile communication terminal. The operating condition transmitted by the content server is a condition which allows the mobile communication terminal to transfer the content only within a predeterminedarea. The mobile communication terminal receives information on its current position from a GPS satellite. Moreover, the mobile communication terminal can transfer the content only if the unique data transmitted from the data transmitting device can be received.

## Description

The present invention relates to a mobile communication terminal, a mobile communication system and a content delivery method, and more particularly to a technology of controlling transfer of content.

In recent years, a mobile communication terminal, such as a cellular telephone, for example, has become able to receive content with large amounts of information anytime, anywhere. Through a so-called ubiquitous network, a user of the mobile communication terminal obtains so-called rich content, such as music, still images, moving images, games, and various contents obtained through e-commerce.

These kinds of content can be further transferred to another mobile communication terminal and spread to many people. However, when content to be transmitted is spread to many people, scarcity value thereof becomes small. Thus, some content senders do not want their content to be transferred without restriction. These content senders try to get customers by transmitting content with scarcity value only to mobile communication terminals located within a limited area. They use short-range communication means for this purpose.

Regarding such a content delivery method as described above, Japanese Patent Laid-Open No. 2002-262227 discloses a technology of preventing received information from being transmitted to the Internet against intentions of information creators, or of making it difficult to utilize information transmitted to the Internet. In Japanese Patent Laid-Open No. 2003-203133, a content access terminal requests access to content to a copyright information management unit, and the management unit determines whether or not content can be accessed and transmits access permission information to the terminal.

A mobile communication terminal of the present invention includes: a first receiver for receiving an operating condition; a second receiver for receiving predetermined data; and a controller for determining whether or not received content can be transferred, based on the operating condition and the predetermined data. A mobile communication system of the present invention includes: a mobile communication terminal capable of receiving content; an information processing device which transmits a transfer condition; and a data transmitting device for transmitting predetermined data. The mobile communication terminal of the system includes: a first receiver for receiving the transfer condition; a second receiver for receiving the predetermined data; and a controller unit for determining whether or not received content can be transferred, based on the operating condition and the predetermined data. A content delivery method of the present invention includes the steps of: transmitting content through a wireless network to a mobile communication terminal; transmitting a transfer condition for the content to the mobile communication terminal; and transmitting predetermined data to the mobile communication terminal. In the above-described content delivery method, the transfer condition is the condition which enables transfer of the content when the mobile communication terminal is located in a predetermined area.

In the above-described invention, a content deliverer can effectively limit transfer of delivered content.

The above and other objects, features and advantages of the present invention will become apparent from the following detailed description when taken with the accompanying drawings in which:
FIG. 1 shows an embodiment of a mobile communication system according to the present invention;
FIG. 2 is a block diagram of the embodiment of a mobile communication terminal according to the present invention;
FIG. 3 shows an example of information received by the mobile communication terminal;
FIG. 4 shows an example of a flow of receiving content by the mobile communication terminal of the present invention;
FIG. 5 shows an example of a flow of transferring content by the mobile communication terminal of the present invention; and
FIG. 6 shows another example of the flow of transferring content by the mobile communication terminal of the present invention.

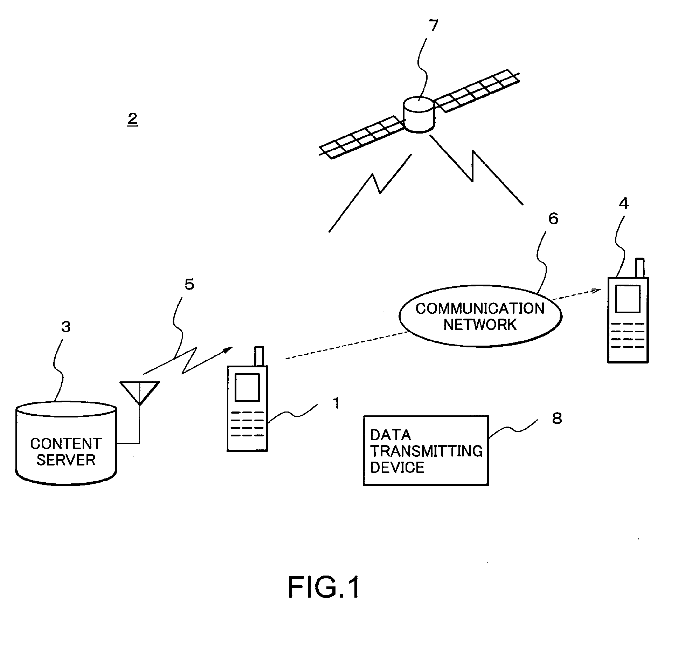

The preferred embodiment of the present invention will be described below. With reference to FIG. 1, in an embodiment of a mobile communication system 2 of the present invention, a plurality of mobile communication terminals 1 and 4 (for example, cellular telephones) can transmit/receive information to/from each other through a communication network 6. Through a short-range communication line 5, a content server 3 transmits content to the mobile communication terminal 1 located within a predetermined distance from the server 3 and receives information from the mobile communication terminal 1. The short-range communication line 5 can include a wire communication line and a wireless communication line. The wireless communication line can be selected from, for example, infrared communication, Bluetooth, a wireless LAN (IEEE802.11b or the like) and the like. The communication network 6 is a public communication network in which conversation over the cellular telephone is possible. Note that the communication network 6 can be replaced by short-range communication lines such as infrared communication, Bluetooth and a wireless LAN.

The mobile communication system 2 further includes at least one of a GPS satellite 7 and a data transmitting device 8. The GPS satellite 7 is applied to a global positioning system (GPS). The GPS satellite 7 revolves around the earth and transmits observation data to a GPS receiver on the earth by use of radio signals. The GPS receiver can locate itself by receiving the radio signals. A plurality of data transmitting devices 8 can be installed in the mobile communication system 2. The data transmitting device 8 outputs specific data unique to the data transmitting device 8 by use of short-range wireless data communication means. The short-range wireless data communication means is, for example, the infrared communication, Bluetooth, the wireless LAN or the like. Note that the data transmitting device 8 can be a wireless base station of a microcellular mobile communication system with a small coverage area. The wireless base station similarly outputs specific data unique to the wireless base station.

The content server 3 has a content database. Content includes, for example: content such as text data, sound, voice, music, still images, moving images, videos and games; content generated through e-commerce; digital content; or combinations of content described above. The content server 3 can broadcast content within a predetermined area. The server 3 can transmit predetermined content upon request of the mobile communication terminal 1. The server 3 can transmit a predetermined operating condition (that is, a transfer condition) to the mobile communication terminal 1 together with or separately from the content. In order to limit transfer of content, a content provider transmits the operating condition described above. The operating condition enables transfer of received content when the mobile communication terminal 1 is located in a predetermined area. The operating condition make it possible for the mobile communication terminal 1 to transfer the received content if unique signals transmitted from the data transmitting device 8 can be received.

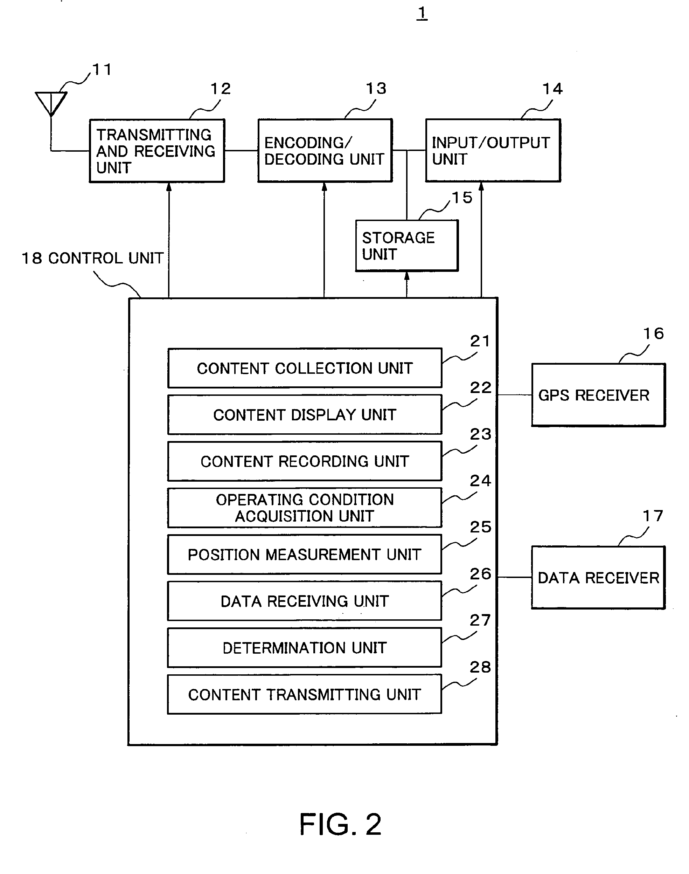

With reference to FIG. 2, the mobile communication terminal 1 of the embodiment includes an antenna 11, a transmitting and receiving unit 12, an encoding/decoding unit 13, an input/output unit 14, a storage unit 15 and a control unit 18. The storage unit 15 includes a detachable memory like a memory card in the terminal 1. The input/output unit 14 includes a microphone, a speaker, a liquid crystal display, a keypad, a data communication interface (for example, USB, Bluetooth and an infrared communication interface), a camera, and the like. The terminal 1 further includes a GPS receiver 16 and a data receiver 17. The GPS receiver 16 receives radio signals transmitted by the GPS satellite 7 and calculates a current position of the GPS receiver 16. The data receiver 17 receives unique data outputted from the data transmitting device 8. The mobile communication terminal 1 includes one or both of the GPS receiver 16 and the data receiver 17.

The control unit 18 includes a content collection unit 21, a content display unit 22, a content recording unit 23, an operating condition acquisition unit 24, a position measurement unit 25, a data receiving unit 26, a determination unit 27 and a content transmitting unit 28. The control unit 18 is a CPU, and functions of the respective units described above are realized by stored computer programs. The content collection unit 21 requests content to the content server 3 through the short-range communication line 5 and downloads content data including the content. The content display unit 22 displays the downloaded content on a liquid crystal display. The content recording unit 23 stores the obtained content in the storage unit 15. The operating condition acquisition unit 24 acquires an operating condition attached to the downloaded content. The operating condition include data on a range of the position of the mobile communication terminal 1, within which the mobile communication terminal 1 can transfer the content to the other mobile communication terminal 4. The position measurement unit 25 calculates the position of the mobile communication terminal 1 based on data received by the GPS receiver 16. The data receiving unit 26 receives unique data transmitted by the data transmitting device 8 through the data receiver 17.

The determination unit 27 determines whether or not the position of the mobile communication terminal 1, which is calculated by the position measurement unit 25, satisfies the acquired operating condition. Depending on whether or not the operating condition is satisfied, the determination unit 27 controls operations of the content transmitting unit 28. The determination unit 27 determines whether or not the unique data received by the data receiving unit 26 satisfies the acquired operating condition. Depending on whether or not the operating conditions are satisfied, the determination unit 27 controls operations of the content transmitting unit 28. The determination unit 27 has both or one of the above-described two kinds of determination functions. The content transmitting unit 28 can transfer, through the communication network 6, the downloaded content data (the content data includes the operating condition and the content) to the other mobile communication terminal 4.

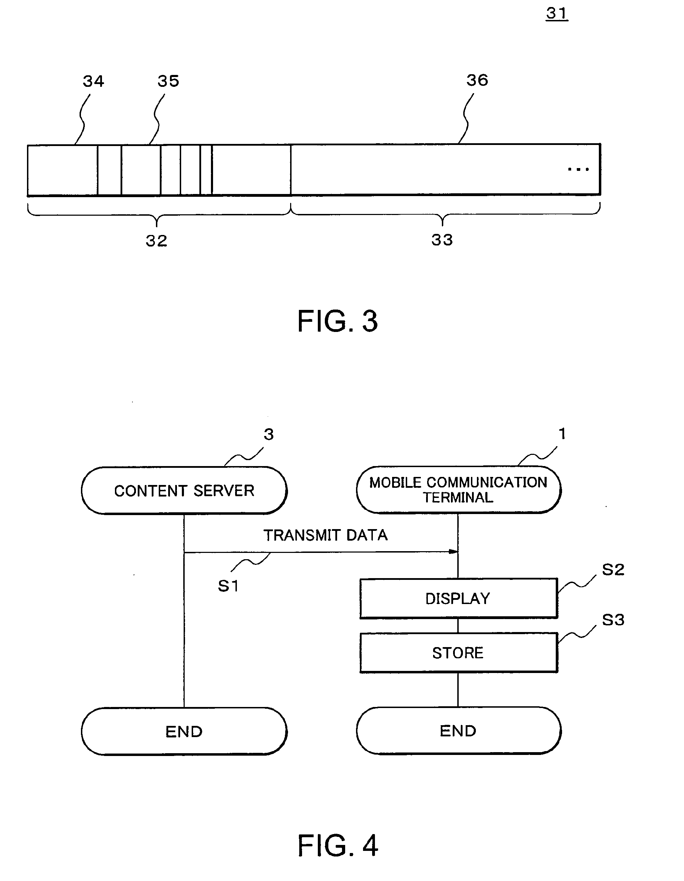

FIG. 3 shows an example of content data transmitted by the content server 3. The content data 31 has a header part 32 and a payload part 33. The header part 32 includes a content ID 34 and a operating condition 35. The payload part 33 includes content 36. The content ID 34 is information for identifying the content 36. The operating condition 35 include data on a range of the position of the mobile communication terminal 1, within which the mobile communication terminal 1 can transfer the content 36.

FIG. 4 shows an example of an operation of transmitting content to the mobile communication terminal 1 by the content server 3. When the mobile communication terminal 1 is located in an area in which communication with the content server 3 is possible, the terminal 1 requests content to the content server 3. In response to the request, the content server 3 delivers content data including the content to the terminal 1 (S1). The content data includes an operating condition corresponding to the content. The mobile communication terminal 1 can display the content data on a display (S2). The mobile communication terminal 1 can store the content data in the storage unit 15 (S3). The content server 3 transmits the content data through the short-range communication line 5. Thus, a user of the mobile communication terminal 1 who wants to obtain the content from the server 3 comes to an area in which the content server 3 is located.

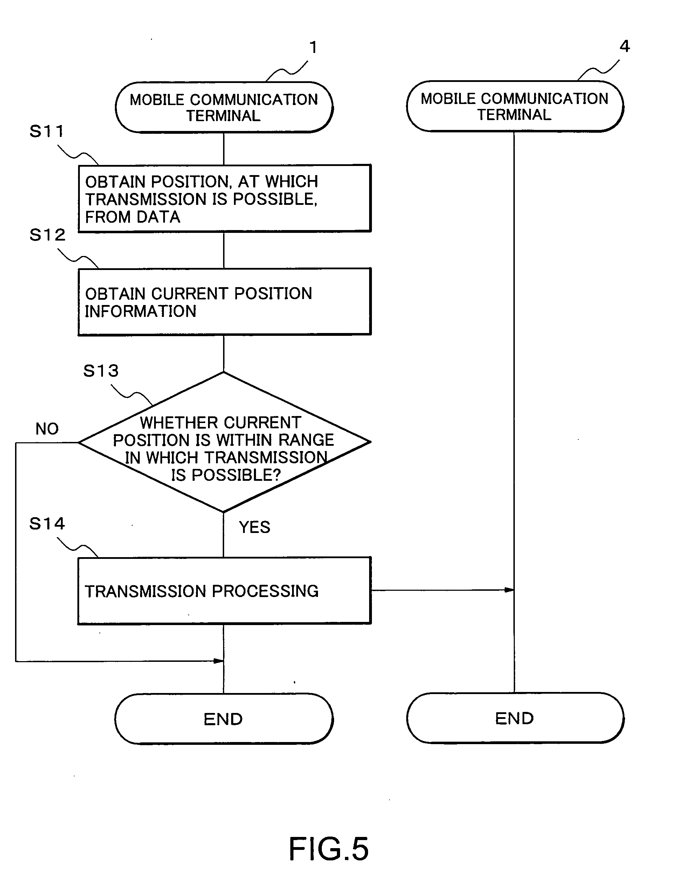

FIG. 5 shows an example of an operation of transferring content to the other mobile communication terminal 4 by the mobile communication terminal 1. When the terminal 1 transfers a content received from the content server 3 to the other terminal 4, an operating condition are retrieved from content data including the content (S11). The terminal 1 obtains its current positionby use of the GPS receiver 16 and the position measurement unit 25 (S12). If the current position is within an area indicated by the above-described operating condition (YES in S13), the terminal 1 can transmit the content data including the content to the mobile communication terminal 4. If the current position is outside the area indicated by the above-described operating condition (NO in S13), the terminal 1 cannot transmit the content data including the content to the terminal 4. Since the operating condition is transmitted to the mobile communication terminal 1 together with the content, a content deliverer can effectively limit transfer of the content to be delivered.

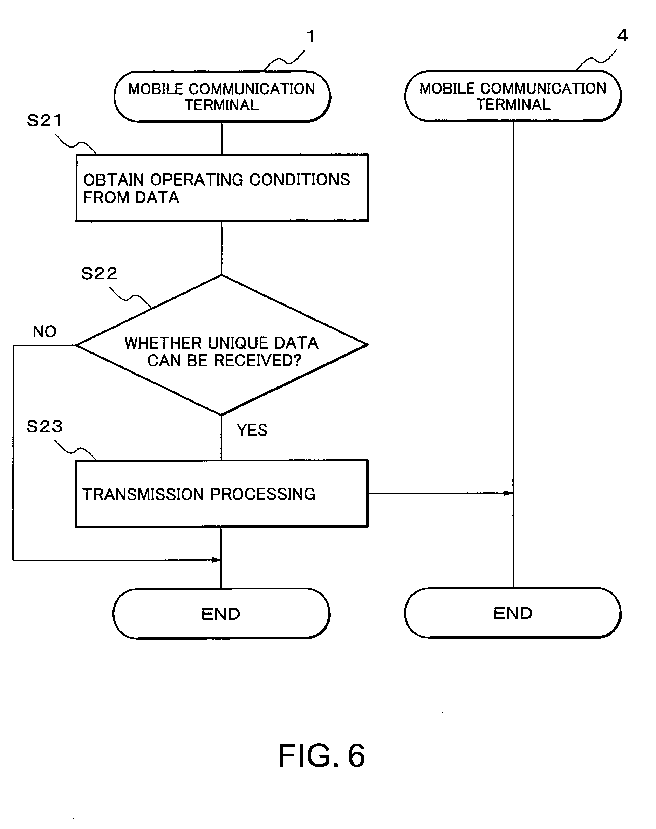

FIG. 6 shows another example of the operation of transferring content to the other mobile communication terminal 4 by the mobile communication terminal 1. The terminal 1 carries out an operation of receiving unique data transmitted from the data transmitting device 8, by use of the data receiver 17 and the data receiving unit 26 every predetermined time period. As in the case of the operation of FIG. 5, when the terminal 1 transfers a content received from the content server 3 to the other mobile communication terminal 4, an operating condition is retrieved from content data including the content (S21). The operating condition is the condition that transfer of the content by the terminal 1 is permitted only when the terminal 1 receives the unique data transmitted from the data transmitting device 8. If the terminal 1 can receive the unique data (YES in S22), the terminal 1 can transmit the content data to the mobile communication terminal 4 (S23). If the terminal 1 cannot receive the unique data (NO in S22), the terminal 1 cannot transmit the content data to the mobile communication terminal 4. In this event, only when the terminal 1 is located within an area in which the unique data transmitted from the data transmitting device 8 can be received, the terminal 1 can transfer the content data to the other terminal 4. Also in the mobile communication terminal 4, transfer of the content is limited by the above-described operating conditions. Also in the case shown in FIG. 6, a content deliverer can effectively limit transfer of the content to be delivered.

While the present invention has been described in connection with a certain preferred embodiment, it is to be understood that the subject matter encompassed by the present invention is not limited to that specific embodiment. On the contrary, it is intended to include all alternatives, modifications, and equivalents as can be included within the spirit and scope of the following claims.

## Claims

1. Amobile communication terminal capable of receiving content, comprising:
a first receiver for receiving an operating condition;
a second receiver for receiving predetermined data; and
a controller for determining whether or not received content can be transferred, based on the operating condition and the predetermined data.

2. The mobile communication terminal according to claim 1, wherein an outside information processing device transmits the content and the operating condition.

3. The mobile communication terminal according to claim 2, wherein the outside information processing device simultaneously transmits the operating condition and the content.

4. The mobile communication terminal according to claim 3, wherein the operating condition is disposed in a header part, and the content is disposed in a payload part.

5. The terminal according to claim 1, 2, 3 or 4,
wherein the operating condition enable transfer of the content when the mobile communication terminal is located in a predetermined area.

6. The terminal according to any one of claims 1 to 5,
wherein the second receiver receives data on a position of a mobile terminal.

7. The mobile communication terminal according to claim 6, wherein the second receiver receives data from a GPS satellite.

8. The terminal according to any one of claims 1 to 7,
wherein, when the mobile communication terminal is located within a predetermined distance from a data transmitting device for transmitting predetermined data, the second receiver receives the data.

9. The mobile communication terminal according to claim 8, wherein communication between a data transmitting device and the second receiver is performed based on at least one communication protocol selected from infrared communication, Bluetooth and a wireless LAN.

10. The terminal according to any one of claims 1 to 9,
wherein the second reception unit includes a receiving unit for receiving data from a GPS satellite and a receiving unit for receiving predetermined data transmitted from a data transmitting station.

11. The terminal according to any of the claims 1 to 10,
wherein the content is at least one of sound, voice, text data, a still image, a moving image and digital content.

12. The terminal according to claim 8, 9, 10, or 11,
wherein the mobile communication terminal is a mobile telephone, and the data transmitting device is a wireless base station.

13. The terminal according to any one of claims 1 to 12,
wherein the mobile communication terminal receives the content based on at least one communication protocol selected from infrared communication, Bluetooth and a wireless LAN.

14. A mobile communication system comprising:
a mobile communication terminal capable of receiving content;
an information processing device for transmitting an transfer condition; and
a data transmitting device for transmitting predetermined data,
wherein the mobile communication terminal includes a first receiver for receiving the transfer condition, a second receiver for receiving the predetermined data and a controller for determining whether or not received content can be transferred, based on the transfer condition and the predetermined data.

15. The mobile communication system according to claim 14, wherein the operating condition enables transfer of the content when a mobile communication terminal is located in a predetermined area.

16. The system according to claim 14 or 15,
wherein the predetermined data is data on a position of a mobile terminal.

17. The system according to claim 14, 15 or 16,
wherein the second receiver receives data from a GPS satellite.

18. The system according to any one of claims 14 to 17,
wherein, when the mobile communication terminal is located within a predetermined distance from the data transmitting device for transmitting the predetermined data, the second receiver receives the data.

19. The system according to any one of claims 14 to 18,
wherein the information processing device simultaneously transmits the content and the operating condition.

20. A content delivery method comprising the steps of:
transmitting content through a wireless network to a mobile communication terminal;
transmitting a transfer condition for the content to the mobile communication terminal; and
transmitting predetermined data to the mobile communication terminal,
wherein the transfer condition is the condition which enables transfer of the content when the mobile communication terminal is located in a predetermined area.

21. The content delivery method according to claim 20, wherein the mobile communication terminal includes a receiver for receiving the predetermined data.

22. The content delivery method according to claim 21, wherein the receiver receives the data from a GPS satellite.

23. The method according to claim 21 or 22, wherein
the receiver receives predetermined data transmitted from a data transmitting device.

24. The method according to any one of claims 20 to 23, wherein the content and the transfer condition are transmitted from the same information processor.
